# EUROPÄISCHE PATENTANMELDUNG

(11) **EP 2 232 994 A1**
(43) Veröffentlichungstag der Anmeldung: **29.09.2010**
(21) Anmeldenummer: 10164325.2
(22) Anmeldetag: 06.06.2008
(51) Int. Cl.: A01N 41/10, A01N 43/08, A01P 13/00

(54) **Synergistische kulturpflanzenverträgliche herbizide Kombinationen enthaltend Tembotrione und Tefuryltrione für den Einsatz in Reis-Kulturen**

(30) Priorität: 19.06.2007 DE 102007028019
(62) Teilanmeldung aus: 08759062.6
(71) Anmelder: Bayer CropScience AG, 40789 Monheim (DE)
(72) Erfinder: Rosinger, Christopher, Dr., 65719 Hofheim (DE); Schreiber, Bernhard, Dr., 40723 Hilden (DE); Neuwinger, Lothar, Dr., 53604 Bad Honnef (DE); Shirakura, Shinichi, Tochigi 323-0807 (JP)

(57) **Zusammenfassung**

Synergistische herbizide kulturplanzenverträgliche Kombinationen für den Einsatz in Reis-Kulturen, die Tembotrione, Tefuryltrione und gegebenenfalls Isoxadifen-Ethyl enthalten.
Diese Kombinationen weisen eine gegenüber den einzeln angewandten Herbiziden überlegene Wirkung auf.

## Beschreibung

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden enthalten.

Spezieller betrifft sie herbizide Kombinationen für den Einsatz in Reis, welche als Wirkstoff ein Herbizid aus der Gruppe der Benzoylcyclohexandione in Kombination mit mindestens einem weiteren Herbizid enthalten.

Herbizide aus der oben genannten Gruppe der Benzoylcyclohexandione sind aus zahlreichen Dokumenten bekannt. So ist beispielsweise in WO 00/21924 die herbizide Wirkung zahlreicher solcher Verbindungen beschrieben. Einige der darin genannten Benzoylcyclohexandione weisen gute herbizide Wirkung gegenüber in Reis-Kulturen vorkommenden Schadpflanzen auf.

Die Anwendung der aus diesen Schriften bekannten Benzoylcyclohexandione ist jedoch in der Praxis häufig mit Nachteilen verbunden. So ist die herbizide Wirksamkeit nicht immer ausreichend, oder bei ausreichender herbizider Wirksamkeit werden unerwünschte Schädigungen der Reispflanzen beobachtet.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können. Solche Veränderungen äußern sich als mehr oder weniger starke Wirkungsverluste und lassen sich nur bedingt durch höhere Aufwandmengen der Herbizide ausgleichen.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine häufig angewandte Methode zur Verbesserung des Anwendungsprofils eines Herbizids besteht in der Kombination des Wirkstoffs mit einem oder mehreren anderen Wirkstoffen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer gemeinsamen Formulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Aus WO 02/089582 und WO 02/085118 sind herbizide Mischungen von bestimmten Benzoyl-1,3-cyclohexandionen mit verschiedenen Herbiziden bekannt. Aus WO 02/085120 sind herbizide Mischungen von bestimmten Benzoyl-1,3-cyclohexandionen mit Safenern bekannt. Diese Mischungen weisen jedoch in der Praxis erhebliche Nachteile auf. So ist ihre Verträglichkeit gegenüber Nutzpflanzen, insbesondere Reis, nicht immer ausreichend, und ihre Wirkung gegenüber Schadpflanzen ebenfalls nicht immer ausreichend.
Aufgabe der vorliegenden Erfindung ist die Bereitstellung von herbiziden Kombinationen, insbesondere für den Einsatz in Reis-Kulturen, mit gegenüber dem Stand der Technik verbesserten Eigenschaften.

Ein Gegenstand der Erfindung sind herbizide Kombinationen, gekennzeichnet durch einen wirksamen Gehalt an
A) der Verbindung tembotrione sowie deren landwirtschaftlich üblichen Salze (Komponente A),
B) der Verbindung tefuryltrione (Komponente B),
   und
C) gegebenenfalls dem Safener isoxadifen-ethyl (Komponente C).

Die erfindungsgemäßen Kombinationen enthalten die Komponenten A, B und C in einem Gewichtsverhältnis von a:b:c, worin a und b jeweils unabhängig voneinander Werte von 1 bis 200, vorzugsweise 1 bis 100, annehmen können, und c einen Wert von 0 bis 200, vorzugsweise 0 bis 100, annehmen kann.

Die Begriffe "Komponente A", "Herbizid A" und "Wirkstoff A" sind im Rahmen der vorliegenden Beschreibung als gleichbedeutend zu verstehen. Analoges gilt für die Begriffe Komponente B", "Herbizid B" und "Wirkstoff B" sowie "Komponente C", "Safener C" und "Wirkstoff C".

In den erfindungsgemäßen Kombinationen benötigt man in der Regel Aufwandmengen im Bereich von 10 bis 1000 g, vorzugsweise 10 bis 500 g Aktivsubstanz pro Hektar (ai/ha) der Komponente A und 1 bis 1000 g, vorzugsweise 5 bis 500 g der Komponente B. Komponente C wird üblicherweise in einer Aufwandmenge im Bereich von 0 bis 500 g, vorzugsweise 0 bis 400 g Aktivsubstanz pro Hektar (ai/ha) eingesetzt.

Optimale Gewichtsverhältnisse können vom jeweiligen Applikationsgebiet, Unkrautspektrum und der eingesetzten Wirkstoffkombination abhängen und in Vorversuchen bestimmt werden.

Die oben mit ihren "common names" genannten Wirkstoffe sind beispielsweise aus "The Pesticide Manual" 14. Auflage, 2006, British Crop Protection Council, und der Webseite "http://www.alanwood.net/pesticides/" bekannt. Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung.

Bevorzugt sind herbizide Kombinationen, die die nachfolgend genannten Kombinationen von Wirkstoffen enthalten:
tembotrione + tefuryltrione,
tembotrione + tefuryltrione + isoxadifen-ethyl.

Die erfindungsgemäßen Kombinationen sind hervorragend geeignet zur selektiven Bekämpfung von Schadpflanzen in Reis-Kulturen.

Die erfindungsgemäßen Kombinationen können in allen Applikationsarten, die für Reis-Herbizide üblich sind, eingesetzt werden. Besonders vorteilhaft werden sie in der Spritzapplikation und in der "submerged application" eingesetzt. Bei der sogenannten "submerged application" bedeckt das Anstauwasser schon zum Zeitpunkt der Applikation die Erde um bis zu 30mm. Die erfindungsgemäßen Kombinationen werden dann direkt, z.B. in Form eines Granulats in das Anstauwasser gegeben. Weltweit wird die Spritzapplikation vorwiegend bei gesätem Reis ("seeded rice") und die sogenannte "submerged application" vorwiegend bei verpflanztem Reis ("transplanted rice") eingesetzt.

Die erfindungsgemäßen Kombinationen erfassen ein breites Unkrautspektrum. Sie eignen sich beispielsweise zur Bekämpfung von annuellen und perennierenden Schadpflanzen wie beispielsweise aus den Spezies Abuthylon, Alopecurus, Avena, Chenopodium, Cynoden, Cyperus, Digitaria, Echinochloa, Elymus, Galium, Ipomoea, Lamium, Matricaria, Scirpus, Setaria, Sorghum, Veronica, Viola und Xanthium, insbesondere Echinochloa spp., Leptochloa spp., Scirpus spp., Cyperus spp., Sagittaria spp., Monochoria spp., Lindernia spp., Eleocharis spp. und Sesbania spp.

Die erfindungsgemäßen herbiziden Kombinationen zeichnen sich auch dadurch aus, daß die in den Kombinationen verwendeten und wirksamen Dosierungen der Komponenten A und B gegenüber einer Einzeldosierung verringert ist, so daß eine Reduzierung der nötigen Aufwandmengen der Wirkstoffe ermöglicht wird.

Die erfindungsgemäßen herbiziden Kombinationen weisen in bevorzugter Ausführungsform synergistische Wirkungen bei gleichzeitiger hoher Verträglichkeit gegenüber Kulturpflanzen auf. Die synergistischen Wirkungen und die hohe Verträglichkeit gegenüber Kulturpflanzen können z.B. bei gemeinsamer Ausbringung der Komponenten A, B und C beobachtet werden, sie können jedoch häufig auch bei zeitlich versetzter Anwendung (Splitting) festgestellt werden. Möglich ist auch die Anwendung der einzelnen Herbizide und Safener oder der Herbizid-Safener-Kombinationen in mehreren Portionen (Sequenzanwendung), z. B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Erfindungsgemäß umfasst sind auch solche herbiziden Kombinationen, die neben den Komponenten A, B und C gegebenenfalls noch ein oder mehrere weitere agrochemische Wirkstoffe anderer Struktur enthalten, wie Herbizide, Insektizide, Fungizide oder Safener. Für solche Kombinationen gelten die vor- und nachstehend erläuterten bevorzugten Bedingungen ebenfalls. Diese weiteren agrochemischen Wirkstoffe können sowohl in den erfindungsgemäßen Kombinationen als sogenannte Fertigformulierung vorliegen, als auch als sogenannte Tankmischung durch gemeinsame Verdünnung der getrennt formulierten oder partiell getrennt formulierten Komponenten zur Anwendung gebracht werden.

Ebenso erfindungsgemäß umfasst sind insbesondere auch solche Kombinationen, die neben den Komponenten A, B und C noch Düngenmittel, wie Ammoniumsulfat, Ammoniumnitrat, Harnstoff, Kaliumnitrat und Mischungen davon, enthalten. Für solche Kombinationen gelten die vor- und nachstehend erläuterten bevorzugten Bedingungen ebenfalls.

Weiterhin erfindungsgemäß umfasst sind auch solche Kombinationen, die neben den Komponenten A, B und C noch Adjuvantien, wie Emulgatoren, Dispergatoren, mineralische und pflanzliche Öle und Mischungen davon, enthalten. Für solche Kombinationen gelten die vor- und nachstehend erläuterten bevorzugten Bedingungen ebenfalls.

Die erfindungsgemäßen Kombinationen können sowohl als Mischformulierungen der Herbizide A und B sowie des Safeners C, gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser oder mit wässrigen Lösungen von Düngemitteln, beispielsweise solche wie oben genannt, hergestellt werden.

Die erfindungsgemäßen Kombinationen eignen sich hervorragend zur Bekämpfung von Schadpflanzen, insbesondere von Schadpflanzen in Reis-Kulturen. Gegenstand der Erfindung ist somit auch ein Verfahren zur Bekämpfung von unerwünschtem Pflanzenwuchs, **dadurch gekennzeichnet, daß** eine oder mehre der erfindungsgemäßen Kombinationen auf die Schadpflanzen, Pflanzenteile davon oder die Anbaufläche appliziert wird.

Die Komponenten A, B und gegebenenfalls C können auf verschiedene Arten formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit weiteren pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden:
Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gewichtsprozent, Wirkstoffe A, B und gegebenenfalls C sowie 99,8 bis 5 Gewichtsprozent im Pflanzenschutz übliche Formulierungsmittel, wobei je nach Formulierungsart folgende Konzentrationen üblich sind: In Spritzpulvern beträgt die Wirkstoffkonzentration z.B. etwa 10 bis 95 Gewichtsprozent, der Rest zu 100 Gewichtsprozent besteht aus üblichen Formulierungsbestandteilen. Bei emulgierbaren Konzentraten kann die Wirkstoffkonzentration z.B. 5 bis 80 Gewichtsprozent, betragen. Staubförmige Formulierungen enthalten meistens 5 bis 20 Gewichtsprozent an Wirkstoff, versprühbare Lösungen etwa 0,2 bis 25 Gewichtsprozent Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gewichtsprozent. Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Komponenten A, B und gegebenenfalls C hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

### A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.
b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° C) mischt und in einer Reibkugelmühle auf eine Feinheit von unter 5 Mikron vermahlt.
d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
e) Ein in Wasser dispergierbares Granulat wird erhalten indem man
   75 Gew.-Teile eines Wirkstoffs/Wirksstoffgemischs,
   10 Gew.-Teile ligninsulfonsaures Calcium,
   5 Gew.-Teile Natriumlaurylsulfat, 3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile eines Wirkstoffs/Wirksstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### Unkrautwirkung im Nachauflauf

Samen bzw. Wurzelstücke von mono- und dikotylen Schadpflanzen werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Etwa drei Wochen nach der Aussaat werden die Pflanzen in 2- bis 3-Blattstadium mit den herbiziden Wirkstoffen beziehungsweise den erfindungsgemäßen Kombinationen behandelt. Bei der Spritzapplikation werden die als Spritzpulver bzw. als Emulsionskonzentrate formulierten erfindungsgemäßen Kombinationen in verschiedenen Dosierungen mit einer Wasseraufwandmenge von umgerechnet 600 bis 800 I/ha auf die grünen Pflanzenteile gesprüht. Unmittelbar bis einige Tage nach der Applikation werden die Versuchsgefässe um bis zu 30mm über die Erdoberfläche mit Wasser angestaut. Bei der Wasserapplikation ("submerged application") hingegen ist die Erde im geschlossenen Versuchsgefäss zum Zeitpunkt der Applikation schon mit dem Anstauwasser bis zu 30mm bedeckt. Die formulierten Wirkstoffe werden hier direkt in das Anstauwasser gegeben. Nach weiteren 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Kombinationen weisen auch im Nachauflauf eine hervorragende herbizide Wirksamkeit gegen ein breites Spektrum wirtschaftlich wichtiger Schadpflanzen auf. Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby liegen.

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ ist kann in manchen Fällen beobachtet werden, daß eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.
Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

Dabei bedeuten:
- A, B: = Wirkung der Komponente A bzw. B in Prozent bei einer Dosierung von a bzw. b Gramm ai /ha.
- E: = Erwartungswert in % bei einer Dosierung von a+b Gramm ai/ha.

Die beobachteten Werte der unten genannten Versuchsbeispiele liegen über (Schadpflanzen) beziehungsweise unter (Kulturpflanzen) den Erwartungswerten nach Colby.

Die Abkürzungen bedeuten:
- SCPSS: Scirpus juncoides

In den Ausführungsbeispielen wurden folgende Wirkstoffe verwendet:
- tembotrione: A1: tefuryltrione: A2

**Tabelle : Wirkung im Nachauflauf**

| Verbindung | Dosierung [g a.i./ha] | Wirkung gegen SCPSS |
|---|---|---|
| A1 | 12,5 | 40% |
| A2 | 37,5 | 50% |
| A1 + A2 | 12,5 + 37,5 | 80% |
| Colby Erwartungswert: | | 70% |
| Differenz: | | +14% |

## Patentansprüche

1. Herbizide Kombinationen, **gekennzeichnet durch** einen wirksamen Gehalt an
A) der Verbindung tembotrione sowie deren landwirtschaftlich üblichen Salze (Komponente A),
B) der Verbindung tefuryltrione (Komponente B),
und
C) gegebenenfalls dem Safener isoxadifen-ethyl (Komponente C).

2. Herbizide Kombinationen nach Anspruch 1, **dadurch gekennzeichnet, daß** die Komponenten A, B und C in einem Gewichtsverhältnis von a:b:c vorliegen, worin a und b jeweils unabhängig voneinander Werte von 1 bis 200 annehmen können, und c einen Wert von 0 bis 200 annehmen kann.

3. Herbizide Kombinationen nach Anspruch 1, worin a und b jeweils unabhängig voneinander Werte von 1 bis 100 annehmen können, und c einen Wert von 0 bis 100 annehmen kann.

4. Herbizide Kombinationen nach einem der Ansprüche 1 bis 3, **dadurch gekennzeichnet, daß** die Komponente A in einer Aufwandmenge von 10 bis 1000 g, die Komponente B in einer Aufwandmenge von 1 bis 1000 g und die Komponente C in einer Aufwandmenge von 0 bis 500 g eingesetzt wird.

5. Herbizide Kombinationen nach einem der Ansprüche 1 bis 3, **dadurch gekennzeichnet, daß** die Komponente A in einer Aufwandmenge von 10 bis 500 g, die Komponente B in einer Aufwandmenge von 5 bis 500 g und die Komponente C in einer Aufwandmenge von 0 bis 400 g eingesetzt wird.

6. Herbizide Kombinationen nach einem der Ansprüche 1 bis 5 **dadurch gekennzeichnet, daß** sie 0,2 bis 95 Gewichtsprozent Wirkstoffe A, B und gegebenenfalls C sowie 99,8 bis 5 Gewichtsprozent im Pflanzenschutz übliche Formulierungsmittel enthalten.

7. Verfahren zur Bekämpfung von unerwünschtem Pflanzenwuchs in Reis-Kulturen, **dadurch gekennzeichnet, daß** man eine oder mehrere herbizide Kombinationen gemäß einem der Ansprüche 1 bis 6 auf die Schadpflanzen, Pflanzenteile davon oder die Anbaufläche appliziert.

8. Verwendung einer herbiziden Kombination aus nach einem der Ansprüche 1 bis 6 zur Bekämpfung von unerwünschtem Pflanzenwuchs in Reis-Kulturen.
